# EUROPEAN PATENT SPECIFICATION

(11) **EP 1 483 495 B1**
(45) Date of publication and mention of the grant of the patent: **08.03.2006**
(21) Application number: 02767759.0
(22) Date of filing: 04.09.2002
(51) Int. Cl.: F02M 35/024

(54) **KNOCKED-DOWN AIR FILTER FOR INTERNAL COMBUSTION ENGINE**
ZUSAMMENGESETZES LUFTFILTER FÜR BRENNKRAFTMASCHINE
FILTRE A AIR EN PIECES DETACHEES POUR MOTEUR A COMBUSTION INTERNE

(30) Priority: 08.03.2002 ID 20020120
(43) Date of publication of application: 08.12.2004
(73) Proprietor: Wijaya, Heru Prasanta, Surabaya 60226 (ID)
(72) Inventor: Wijaya, Heru Prasanta, Surabaya 60226 (ID)
(74) Representative: RACKETTE Partnerschaft Patentanwälte
(86) International application number: PCT/IB2002/003574
(87) International publication number: WO 2003/076791

(56) References cited:
- US-A- 4 720 292
- US-A- 6 022 055
- US-A- 6 159 261
- US-A1- 2001 000 845

## Description

### FIELD OF THE INVENTION

This invention relates to an air filter for an automotive engine.

### BACKGROUND OF THE INVENTION

Vehicles are used in industries such as mining, plantation, and forestry. They can be trucks, excavators, forklifts and multiple-wheeled trucks. These vehicles as well as industrial machines and electrical generators often use an internal combustion engine for their operation.

One of the internal combustion engine components that often needs maintenance and periodic replacement is the air filter. This air filter must be replaced periodically in order to provide the fresh air needed for the efficient combustion in the engine.

US 2001/0000845 A1 discloses an air filter having a tubular metal housing with an end cap affixed to one end of the housing. The opposite end of the housing is enclosed by a removable cover. A generally cylindrical air filter element inside the housing includes an inner liner, an outer liner, filter media, captured therebetween, a closed end and an open end. The open end of the filter element has an end cap formed of an elastomeric material with an opening defined by a generally cylindrical radially inward-facing surface. The diameter of the opening is smaller than the outside diameter of that portion of the outlet member of the end cap that extends into the housing. The filter element is mounted on that portion of the outlet member extending into the tubular housing and the elastomeric material provides a seal.

When it is necessary to replace the air filter due to its construction, lots of waste is produced.

### BRIEF DESCRIPTION OF THE INVENTION

Therefore, the problem to be solved by the invention is to provide an air filter where only the filtering medium and the inner mesh should be periodically replaced.

This problem is solved by an air filter with the features defined in claim 1.

Object of this invention is an air filter which can be knocked-down for the reduction of maintenance and replacement cost in an internal combustion engine.

The use of a knocked-down air filter element according to the invention in an Internal combustion engine will save resources because it is the only part that one needs to replace periodically for an efficient combustion in the engine.

Due to the construction and the use of a reinforcing pile it is possible to reduce substantially waste products and protect the environment.

### BRIEF DESCRIPTION OF THE DRAWING

- Figure 1: is a cross-section of a half of a known air filter,
- Figure 2: is a cross-section of a half of a preferred embodiment of the air filter according to the invention,
- Figure 3: is a cross-section of the half of the filter medium,
- Figure 4: is a cross-section of the half of the air filter in the detached condition,
- Figure 5: is a cross-section of the half of a varied locking model,
- Figure 6: is a cross-section of the half of the air filter with a varied locking model using a hook system.

### DETAILED DESCRIPTION OF THE INVENTION

The subject of this invention is an air filter which can be knocked-down in order to reduce maintenance and replacement costs in an internal combustion engine.

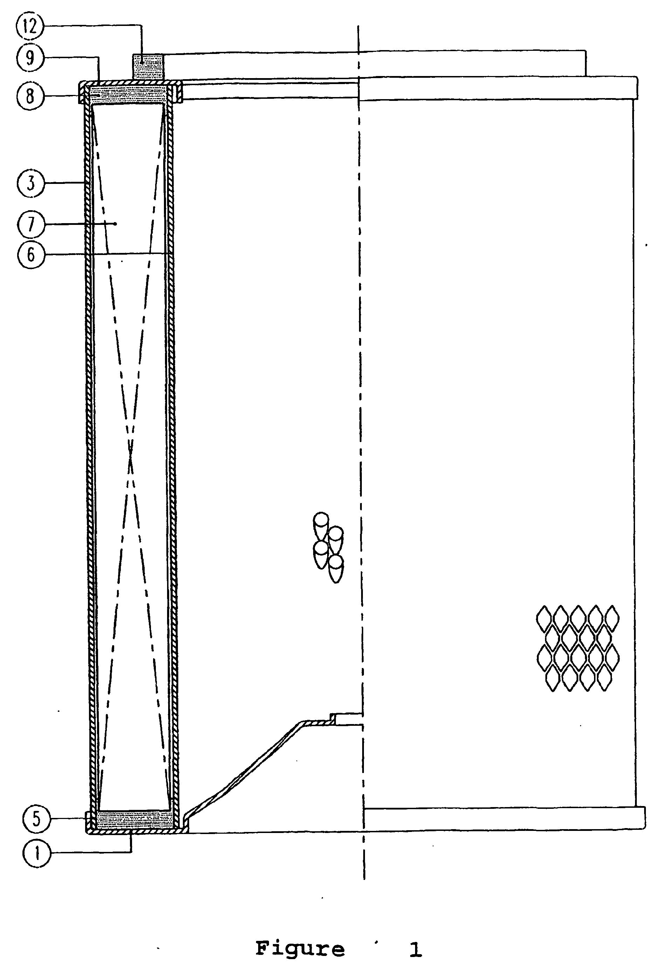

A prior art air filter (Figure 1) generally comprises a lower housing plate 1 portion, a filtering medium 7 which can be upwardly folded, a perforated plate 3 and an inner mesh 6 formed as a cylinder and assembled as a unit by a lower rubber 5 and an upper rubber 8 which acts also as a binder. With such a configuration, all components are replaced when the air filter needs replacement

The part of the air filter, however, that really should be replaced is actually the filtering medium 7 only. This medium, when clogged, prevents the fresh air from entering the combustion chamber of an internal combustion engine.

Based on this consideration, the invention provides an economic knocked-down air filter where only its filtering medium 7 and the inner mesh 6 need to be replaced periodically. Inner mesh 6 is provided as a means of maintaining. The shape of the filtering medium 7 is maintained by the inner mesh 6 which is defined by upwardly extending longitudinal folds.

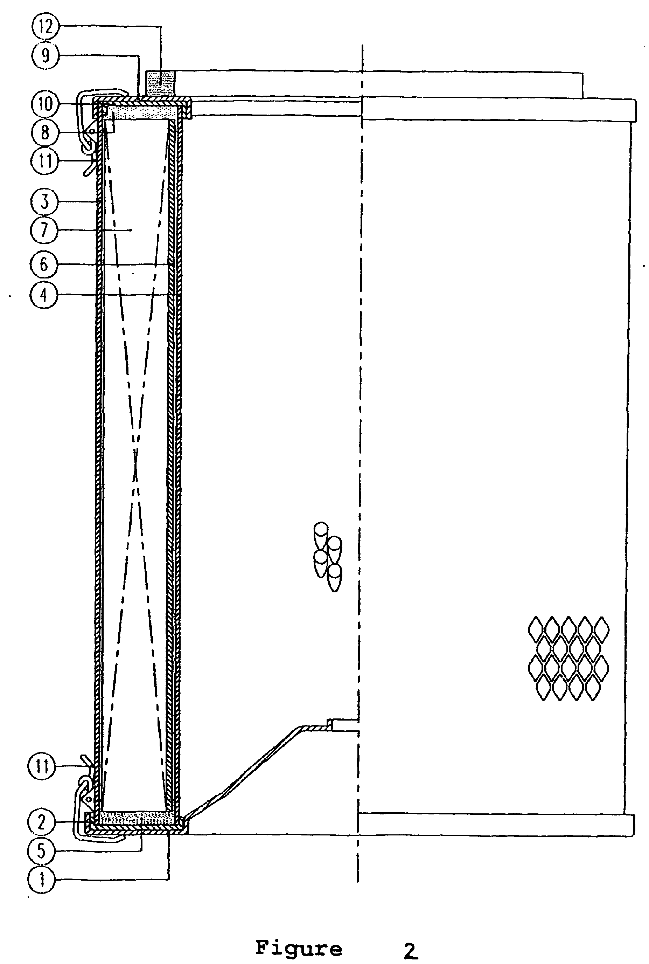

The preferred embodiment of the invention shown in Figure 2 comprises a lower housing 1 as a base, a perforated plate 3 hooked to a holding ring 2 at its lower part and bound to an upper reinforcing ring 10 at its upper part The perforated plate 3 functions as a reinforcing means for the air filter construction and as a retaining means for the filter housing 9 on the upper part of the air filter. To make the air filter more compact in construction, there is provided on its internal parts a reinforcing pile 4 whose upper part is bound to the upper reinforcing rings 10 and lower part is bound to the lower reinforcing ring 2.

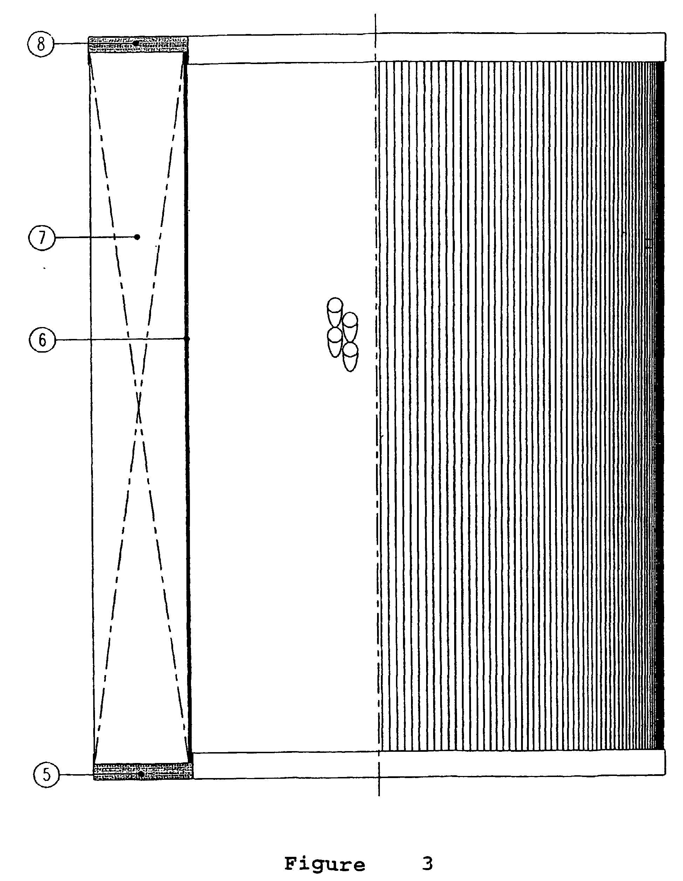

The filtering medium 7 is generally folded longitudinally upward whilst inner mesh 6 is engaged with lower rubber 5 and upper rubber 8. The unification into a single unit of the filtering medium 7 and the inner mesh 6 with the lower rubber 5 and the upper rubber 8 forms a cylinder which can be separated individually from this air filter (Figure 3). It is the single unit formed by the filtering medium 7 and the inner mesh 6 that needs only to be replaced and not all the parts of the air filter.

In assembling the air filter, the lower housing 1, the perforated plate 3, the reinforcing pile 4, the upper reinforcing ring portion 10 which can be opened for the insertion of the filtering medium 7 and the upper housing plate, are unified with manually opened and closed lockers 11. To avoid leakage when the air filter is attached to the combustion engine, a seal 12 is provided on the air filter housing.

Because the part that should be replaced is merely the filtering medium 7 which has been integrally bound with the inner mesh 6 by the lower rubber 5 and the upper rubber 8. the use of this invention will save a lot of money.

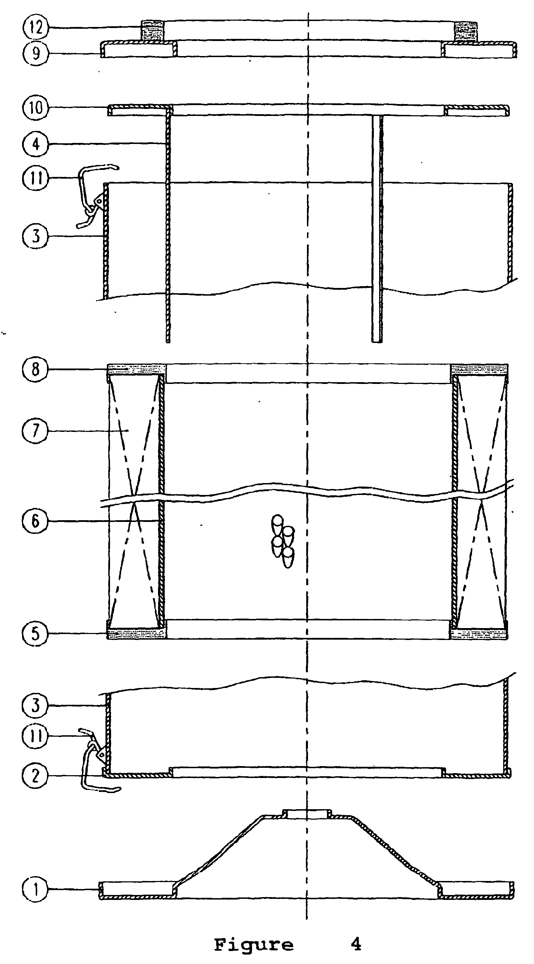

Parts of the air filter, i.e., the air filter that can be knocked down, can be seen in Figure 4.

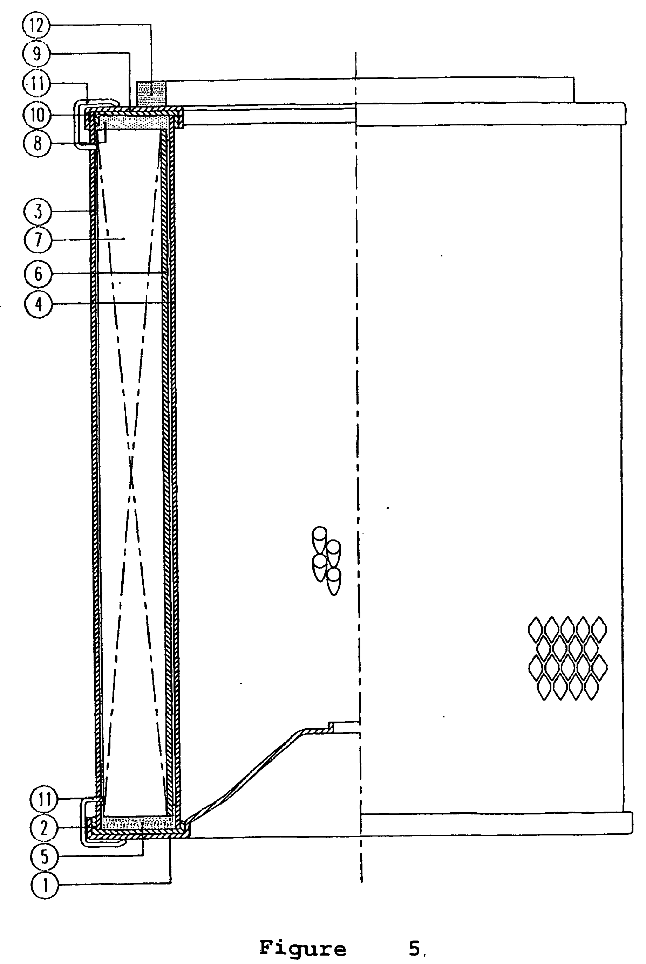

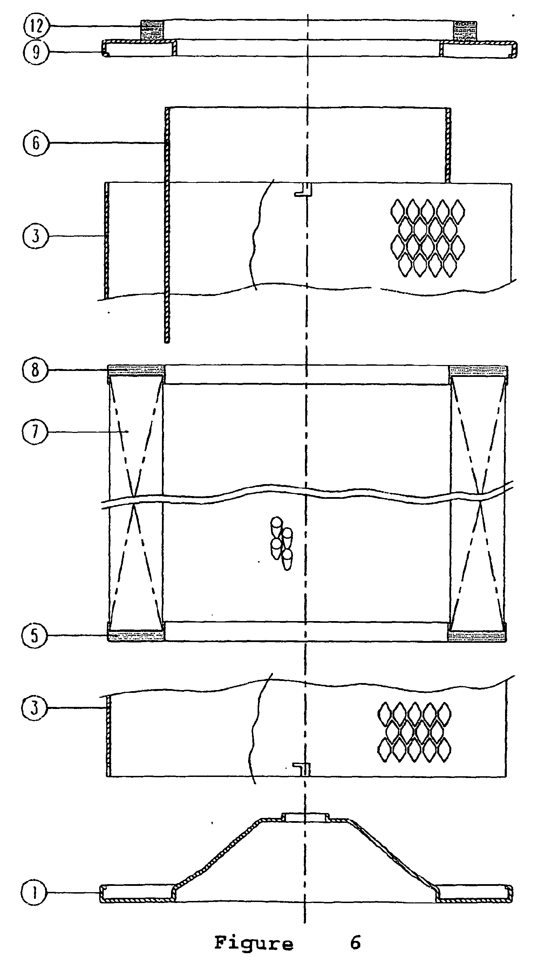

One of the modifications of the preferred embodiment is the shape of the lockers 11. These lockers 11 should be bound on the perforated plate 3. on the lower housing 1, or on the upper housing 9 . It can also be clamped on one part of the air filter instead of being bound on it (Figure 5). Another characteristic that can be modified is the arrangement of the partial binding of the knocked down parts of the air filter. Figure 6 shows a modified locking model of the lower housing 1 and the upper housing 9. The hook used for this modification can be a thread of a screw.

The shape of the reinforcing pile 4 is also subject to modification in that it can be configured as a spiral. The perforated plate can be replaced by a reinforcing spiral or pile. An inner mesh 6 can be provided or not on the filtering medium. When provided, it can be separately made or replaced by a spiral or a pile.

Longitudinal folds that form a filtering medium can also be made from a polymeric material. A filtering medium without folds is also possible.

## Claims

1. Air filter for an internal combustion engine comprising
a filtering medium (7), an Inner mesh (6) engaged by a lower rubber (5) and an upper rubber (8) acting as a binder so that the filtering medium (7) and the inner mesh (6) are engaged integrally,
a detachable lower housing (1), a perforated plate (3), a reinforcing pile (4) and an upper housing (9) which can be assembled, whereby the parts of the filtering medium (7) and the inner mesh (6) which have been engaged are integrally formed into an air filter when combined with the lower housing (1), the perforated plate (3), the reinforcing pile (4), and the upper housing (9) by means of lockers (11).

2. Air filter for an internal combustion engine as defined in claim 1 in which the binding between the lower housing (1) and the upper housing (9) is effected by a perforated plate (3) by means of a hook-locking system.

3. Air filter for an internal combustion engine as defined in claim 1 provided with a clip-locking system.

4. Air filter for an internal combustion engine as defined in claim 1 in which the binding between the lower housing (1) and the upper housing (9) is effected by a perforated plate (3) by means of a thread-locking system.

5. Air filter for internal combustion engine as defined in claim 1 which comprises a reinforcing means in the form of a spiral.

6. Air filter as defined in one of the preceding claims wherein the filtering medium (7) is constituted by a plurality of upwardly extending folds made from filtering paper or other substances and where rubbers are attached on the upper and the lower parts thereof in order to stabilize the shape of the filtering medium (7).

7. Air filter for an internal combustion engine as disclosed in claim 1 in which the engagement model between the lower housing (1) and the upper housing (9) is effected by a perforated plate (3) and an inner mesh (6) using hooks, clips and thread-locking systems.

8. Air filter for an internal combustion engine as defined in claim 1 whose lower housing (1) and upper housing (9) are engaged by a reinforcing means in the form of spiral or pile.

9. Air filter according to any one of the preceding claims having longitudinal folds that form a filtering medium made from polymeric material.

## Patentansprüche

1. Luftfilter für eine Verbrennungskraftmaschine mit einem Filtermedium (7), mit einer inneren Einlage (6), die mit einem unteren Gummiteil (5) und einem oberen Gummiteil (8) in Eingriff sind, die als ein Bindeglied wirken, so dass das Filtermedium (7) und die innere Einlage (6) einstückig miteinander in Eingriff sind, mit einem abnehmbaren unteren Gehäuse (1), mit einer perforierten Platte (3), mit einer Verstärkungssäule (4) und mit einem oberen Gehäuse (9), die zusammenbaubar sind, wobei die Teile des Filtermediums (7) und der inneren Einlage (6), die einstückig miteinander in Eingriff gebracht sind, in einen Luftfilter eingeformt sind, wenn sie mit dem unteren Gehäuse (1), der perforierten Platte (3), der Verstärkungssäule (4) und dem oberen Gehäuse (9) durch Verschlusselemente (11) zusammengebracht sind.

2. Luftfilter für eine Verbrennungskraftmaschine nach Anspruch 1, bei der die Verbindung zwischen dem unteren Gehäuse (1) und dem oberen Gehäuse (9) über eine perforierte Platte (3) mittels eines Hakenverschlusssystems bewerkstelligt ist.

3. Luftfilter für eine Verbrennungskraftmaschine nach Anspruch 1, die mit einem Klammerverschlusssystem ausgestattet ist.

4. Luftfilter für eine Verbrennungskraftmaschine nach Anspruch 1, bei der die Verbindung zwischen dem unteren Gehäuse (1) und dem oberen Gehäuse (9) über eine perforierte Platte (3) mittels eines Schraubverschlusssystems bewerkstelligt ist.

5. Luftfilter für eine Verbrennungskraftmaschine nach Anspruch 1, die ein Verstärkungsmittel in Gestalt einer Spirale aufweist.

6. Luftfilter nach einem der vorangehenden Ansprüche, bei dem das Filtermedium (7) durch eine Anzahl von sich nach oben erstreckenden Falzen aus einem Filterpapier oder anderen Materialien gebildet ist und bei dem die Gummiteile an dessen oberen und unteren Teilen angebracht sind, um die Gestalt des Filtermediums (7) zu stabilisieren.

7. Luftfilter für eine Verbrennungskraftmaschine gemäß Anspruch 1, bei der die Eingriffseinheit zwischen dem unteren Gehäuse (1) und dem oberen Gehäuse (9) durch eine perforierte Platte (3) und einer inneren Einlage (6) unter Verwendung von Haken-, Klammer- und Schraubverschlusssystemen bewerkstelligt ist.

8. Luftfilter für eine Verbrennungskraftmaschine nach Anspruch 1, dessen unteres Gehäuse (1) und oberes Gehäuse (9) mit einem Verstärkungsmittel in Gestalt einer Spirale oder einer Säule in Eingriff sind.

9. Luftfilter nach einem der vorangehenden Ansprüche mit Längsfalzen, die ein Filtermedium aus einem Polymermaterial bilden.

## Revendications

1. Filtre à air pour un moteur à combustion interne, comprenant :
un milieu filtrant (7), un maillage intérieur (6) s'engageant avec une base en caoutchouc inférieure (5) et une base en caoutchouc supérieure (8) faisant office de liant de telle sorte que le milieu filtrant (7) et le maillage intérieur (6) s'engagent complètement,
un boîtier inférieur (1) détachable, une plaque perforée (3), une colonne de renfort (4) et un boîtier supérieur (9) qui peuvent être assemblés, moyennant quoi les éléments du milieu filtrant (7) et du maillage intérieur (6) qui ont été engagés sont formés d'un seul tenant pour obtenir un filtre à air lorsqu'ils sont combinés avec le boîtier inférieur (1), la plaque perforée (3), la colonne de renfort (4), et le boîtier supérieur (9) à l'aide de moyens de blocage (11).

2. Filtre à air destiné à un moteur à combustion interne selon la revendication 1, dans lequel la liaison entre le boîtier inférieur (1) et le boîtier supérieur (9) est réalisée par une plaque perforée (3) à l'aide d'un système de blocage par crochet.

3. Filtre à air destiné à un moteur à combustion interne selon la revendication 1, doté d'un système de blocage par une attache.

4. Filtre à air destiné à un moteur à combustion interne selon la revendication 1, dans lequel la liaison entre le boîtier inférieur (1) et le boîtier supérieur (9) est effectuée par une plaque perforée (3) à l'aide d'un système de blocage par filetage.

5. Filtre à air pour un moteur à combustion interne selon la revendication 1, qui comprend un moyen de renfort sous la forme d'un ressort spiral.

6. Filtre à air selon l'une quelconque des revendications précédentes, dans lequel le milieu filtrant (7) est constitué d'une pluralité de plis s'étendant vers le haut constitués de papier filtrant ou d'autres substances, et dans lequel les bases en caoutchouc sont fixées sur les éléments supérieur et inférieur afin de stabiliser la forme du milieu filtrant (7).

7. Filtre à air destiné à un moteur à combustion interne selon la revendication 1, dans lequel le modèle d'engagement entre le boîtier inférieur (1) et le boîtier supérieur (9) est effectué par une plaque perforée (3) et un maillage inférieur (6) en utilisant des crochets, des attaches et des systèmes de blocage par filetage.

8. Filtre à air destiné à un moteur à combustion interne selon la revendication 1, dont le boîtier inférieur (1) et le boîtier supérieur (9) sont engagés par des moyens de renfort sous la forme d'un ressort spiral ou d'une colonne.

9. Filtre à air selon l'une quelconque des revendications précédentes, comportant des plis longitudinaux qui forment un milieu filtrant constitué de matière polymère.
